# EUROPEAN PATENT APPLICATION

(11) **EP 4 727 247 A1**
(43) Date of publication of application: **15.04.2026**
(21) Application number: 23940094.8
(22) Date of filing: 07.06.2023
(51) Int. Cl.: H04W 74/08

(54) **PHYSICAL RANDOM ACCESS CHANNEL (PRACH) TRANSMISSION METHOD AND APPARATUS**

(71) Applicant: Beijing Xiaomi Mobile Software Co., Ltd., Beijing 100085 (CN)
(72) Inventor: QIAO, Xuemei, Beijing 100085 (CN)
(74) Representative: Stöckeler, Ferdinand
(86) International application number: PCT/CN2023/099010
(87) International publication number: WO 2024/250207

(57) **Abstract**

Disclosed in embodiments of the present disclosure are a PRACH transmission method and apparatus, which can be applied to the technical field of communications. The method performed by a terminal device comprises: determining to perform PRACH transmission on a valid RO after a first RO in a first RO group, or canceling the PRACH transmission on the valid RO after the first RO in the first RO group, wherein the PRACH transmission of the terminal device on the first RO is canceled. Thus. the terminal device can ensure that the PRACH transmission is as successful as possible, thereby reducing the energy consumption of the terminal device and shortening the access delay.

## Description

### TECHNICAL FIELD

The disclosure relates to the field of communication technologies, and in particular to a method and apparatus for physical random access channel (PRACH) transmission.

### BACKGROUND

In the related art, a user equipment (UE) may perform physical random access channel (PRACH) transmission on a valid random access channel occasion (RO) within a RO group.

### SUMMARY

Embodiments of the disclosure provide a method and apparatus for physical random access channel (PRACH) transmission. A user equipment (UE) may ensure that the PRACH transmission is performed as successful as possible, thus reducing power consumption of the UE and shortening an access delay.

In a first aspect, embodiments of the disclosure provide a method for PRACH transmission. The method is performed by a UE, including: determining to perform or canceling PRACH transmission on a valid random access channel occasion (RO) after a first RO in a first RO group, in which the PRACH transmission performed by the UE on the first RO is canceled.

In the technical solution, the UE determines to perform or cancel the PRACH transmission on the valid RO after the first RO in the first RO group, in which the PRACH transmission performed by the UE on the first RO is canceled. Thus, the UE may ensure that PRACH transmission is performed as successful as possible, thus reducing power consumption of the UE and shortening the access delay.

In a second aspect, embodiments of the disclosure provide a communication device. The communication device has a function of realizing some or all of the functions of the UE in the method described in the first aspect. For example, the functions of the communication device may have the functions in some or all embodiments in the disclosure, or may have a functions of implementing any one of the embodiments in the disclosure alone. The functions may be realized by hardware or by hardware executing corresponding software. The hardware or software includes one or more units or modules corresponding to the functions described above.

In an implementation, a structure of the communication device may include a transceiver module and a processing module. The processing module is configured to support the communication device to execute the functions in the method described above. The transceiver module is configured to support communications between the communication device and other devices. The communication device may further include a storage module coupled with the transceiver module and the processing module, which stores necessary computer programs and data for the communication device.

In an implementation, the communication device includes: a transceiver module, configured to determine to perform or cancel PRACH transmission on a valid RO after a first RO in a first RO group, in which the PRACH transmission performed by the UE on the first RO is canceled.

In a third aspect, embodiments of the disclosure provide a communication device. The communication device includes a processor. When a computer program in a memory is called by the processor, the method as described in the first aspect is performed.

In a fourth aspect, embodiments of the disclosure provide a communication device. The communication device includes a processor and a memory. The memory is stored with a computer program; and the processor is configured to execute the computer program stored in the memory, so that the communication device performs the method as described in the first aspect.

In a fifth aspect, embodiments of the disclosure provide a communication device. The communication device includes a processor and an interface circuit. The interface circuit is configured to receive code instructions and transmit the code instructions to the processor; and the processor is configured to execute the code instructions, so that the communication device performs the method as described in the first aspect.

In a sixth aspect, embodiments of the disclosure provide a communication system. The system includes the communication apparatus as described in the second aspect, or the system includes the communication device as described in the third aspect, or the system includes the communication device as described in the fourth aspect, or the system includes the communication device as described in the fifth aspect.

In a seventh aspect, embodiments of the disclosure provide a computer-readable storage medium. The computer-readable storage medium is configured to store instructions used by the UE. When the instructions are executed, the UE performs the method as described in the first aspect.

In an eighth aspect, embodiments of the disclosure provide a computer program product including a computer program. When the computer program is running on a computer, the computer is caused to perform the method as described in the first aspect.

In a ninth aspect, embodiments of the disclosure provide a chip system. The chip system includes at least one processor and an interface, and is configured to support the UE to perform functions involved in the first aspect, for example, to determine or process at least one of data or information involved in the above methods. In a possible design, the chip system further includes a memory. The memory is configured to save a necessary computer program and data for the UE. The chip system may be constituted by a chip, or may include a chip and other discrete devices.

In a tenth aspect, embodiments of the disclosure provide a computer program. When the computer program is running on a computer, the computer is caused to perform the method as described in the first aspect.

### BRIEF DESCRIPTION OF THE DRAWINGS

In order to explain technical solutions in the embodiments of the disclosure or the related art more clearly, the drawings needed for use in the embodiments of the disclosure or in the related art will be briefly introduced below.
FIG. 1 is a diagram illustrating an architecture of a communication system according to the disclosure.
FIG. 2 is a flowchart illustrating a method for physical random access channel (PRACH) transmission according to an embodiment of the disclosure.
FIG. 3 is a flowchart illustrating another method for PRACH transmission according to an embodiment of the disclosure.
FIG. 4 is a flowchart illustrating another method for PRACH transmission according to an embodiment of the disclosure.
FIG. 5 is a flowchart illustrating another method for PRACH transmission according to an embodiment of the disclosure.
FIG. 6 is a flowchart illustrating another method for PRACH transmission according to an embodiment of the disclosure.
FIG. 7 is a flowchart illustrating another method for PRACH transmission according to an embodiment of the disclosure.
FIG. 8 is a flowchart illustrating another method for PRACH transmission according to an embodiment of the disclosure.
FIG. 9 is a flowchart illustrating another method for PRACH transmission according to an embodiment of the disclosure.
FIG. 10 is a block diagram illustrating a communication apparatus according to an embodiment of the disclosure.
FIG. 11 is a block diagram illustrating a communication device according to an embodiment of the disclosure.
FIG. 12 is a block diagram illustrating a chip according to an embodiment of the disclosure.

### DETAILED DESCRIPTION

Embodiments of the disclosure are described in detail below, and examples of the embodiments are illustrated in the accompanying figures, throughout which the same or similar symbols indicate the same or similar components or components with the same or similar functions. The embodiments described below with reference to the accompanying figures are exemplary and are intended to be used to explain the disclosure and are not to be construed as a limitation of the disclosure. In the description of the disclosure, unless otherwise specified, "/" denotes "or" for example, A/B may denote either A or B. The term "and/or" in the text is simply a way of describing an association relationship of associated objects, indicating that there may be three types of relationships. For example, object A and/or object B may mean: object A exists alone, object A and object B exist at the same time, and object B exists alone.

Terms used in the embodiments of the disclosure are for the purpose of describing specific embodiments only, and are not intended to limit the embodiments of the disclosure. As used in the examples of the disclosure and the appended claims, the singular forms "a/an", "said" and "the" are also intended to include the plural forms unless the context clearly dictates otherwise.

It should be understood that although the embodiments of the disclosure may use the terms first, second, third, etc. to describe various information, the information should not be limited to these terms. These terms are only used to distinguish information of the same type from one another. For example, without departing from the scope of the embodiments of the disclosure, first information may also be called second information, and similarly, second information may also be called first information. Depending on the context, the word "if" and "in case" as used herein may be interpreted as "in a case that/of" or "when" or "in response to a determination".

Embodiments of the disclosure are described in detail below, and examples of the embodiments are illustrated in the accompanying figures, throughout which the same or similar symbols indicate the same or similar elements. The embodiments described below with reference to the accompanying figures are exemplary and are intended to be used to explain the disclosure and are not to be construed as a limitation of the disclosure.

In addition, the following points are explained to facilitate understanding of the embodiments of the disclosure.

First, in embodiments of the disclosure, "indicating" may include directly indicating and indirectly indicating. When describing that certain information indicates A, it may include that the information carries A, or the information directly or indirectly indicates A, which does not necessarily mean that A is carried in the information.

The information indicated by the information is referred to as information to be indicated. In specific implementation, there are many ways to indicate the information to be indicated, including but not limited to: directly indicating the information to be indicated, such as the information to be indicated itself or an index of the information to be indicated; indirectly indicating the information to be indicated by indicating other information, where an association relationship exists between the other information and the information to be indicated; or indicating only a part of the information to be indicated, while other parts of the information to be indicated are known or pre-agreed. For example, indication of specific information may also be achieved by utilizing a pre-agreed (e.g., protocol-specified) arrangement order of various types of information, thus reducing indication overhead to some extent.

The information to be indicated may be sent as a whole, or may be divided into a plurality of pieces of sub-information for separate transmission. Further, transmission periods and/or transmission occasions of these pieces of sub-information may be the same or different. The specific transmission method is not limited in the disclosure. The transmission periods and/or transmission occasions of the pieces of sub-information may be predefined, for example, predefined based on a protocol.

Second, in the disclosure, terms such as "first", "second", and various numerical labels are used only for distinguishing descriptions and do not limit the scope of the embodiments of the disclosure. For example, they are used to distinguish different information.

Third, embodiments of the disclosure enumerate a plurality of implementations to provide a clear illustration of the technical solutions of embodiments of the disclosure. Those skilled in the art may understand that the plurality of embodiments provided in the embodiments of the disclosure may be performed individually, may be performed together with the methods of other embodiments in the embodiments of the disclosure in combination, and may be performed individually or in combination with a number of methods of other related technologies. The embodiments of the disclosure do not limit this.

For physical random access channel (PRACH) coverage enhancement, multiple transmissions may be performed in the time domain. In embodiments of the disclosure, further uplink (UL) coverage enhancements may be specified for PRACH, power domain, and discrete Fourier transform spread orthogonal frequency division multiplexing (DFT-S-OFDM). The following PRACH coverage enhancements may be specified (in radio access network (RAN) 1, RAN 2): multiple PRACH transmissions with same beams for 4-step random access channel (RACH) procedure; and, if justified, PRACH transmissions with different beams for 4-step RACH procedure is specified. It should be noted that the enhancements of PRACH are targeting for frequency range 2 (FR2) and may also apply to FR1 when applicable. It should be noted that the enhancements of PRACH are targeting for short PRACH formats and may also apply to other formats when applicable.

In some embodiments, for multiple PRACH transmissions, a network device may select and configure one or more PRACH transmission numbers (i.e., the number of transmissions) from {2, 4, 8} for a user equipment (UE). Further, for multiple PRACH transmissions, a concept of a random access channel occasion (RO) group may be introduced in a protocol. A number of valid ROs in one RO group corresponds to a transmission number configured by the network device, and different transmission numbers configured correspond to different RO groups. A first RO group and a second RO group in the disclosure refer to RO groups corresponding to the same transmission number configured but located at different positions in the time domain, rather than RO groups corresponding to different transmission numbers. After determining a specific transmission number, the UE selects a corresponding RO group to perform multiple PRACH transmissions. For the RO group, in some embodiments, for multiple PRACH transmissions with the same Tx beam, "RO group" is assumed for multiple PRACH transmissions with separate preambles on shared ROs and/or multiple PRACH transmissions on separate ROs, and one RO group consists of valid RO(s) for a specific number of multiple PRACH transmissions. It should be noted that all ROs in one RO group are associated with the same synchronous signal/physical broadcast channel blocks (SSBs). It should be noted that the shared or separate RO/preamble means that the RO/preamble is shared or separated with single PRACH transmission. In some embodiments, multiple PRACH transmissions within one RACH attempt are only performed within one RO group.

In some embodiments, the number of valid ROs in the RO group is equal to one of the configured number(s) for multiple PRACH transmissions. In some embodiments, if only one value is configured for multiple PRACH transmissions, then the number of valid ROs in the RO group is equal to this value. In some embodiments, if multiple values are configured for multiple PRACH transmissions, for each value, the number of valid ROs in an RO group is equal to the corresponding number for the multiple PRACH transmissions. In some embodiments, valid RO(s) refers to what is defined in existing specification. In some embodiments, the method for determining the valid RO is associated with the following. For paired spectrum or supplementary UL band, all PRACH occasions are valid. For unpaired spectrum, if the UE is not provided tdd-UL-DL-ConfigurationCommon, a PRACH occasion in a PRACH slot is valid if the RO does not precede an SS/PBCH block in the PRACH slot and starts at least N_{gap} symbols after a last SS/PBCH block reception symbol, and if channelAccessMode = "semiStatic" is provided, the RO does not overlap with a set of consecutive symbols before the start of a next channel occupancy time where there are no any transmissions for the UE. In some embodiments, the candidate SS/PBCH block index of the SS/PBCH block is the SS/PBCH block index provided by ssb-PositionInBurst in SIB1 or in ServingCellConfigCommon. In some embodiments, if the UE is provided tdd-UL-DL-ConfigurationCommon, a PRACH occasion in a PRACH slot is valid if it is within UL symbols, or if it does not precede an SS/PBCH block in the PRACH slot and starts at least N_{gap} symbols after a last downlink symbol and at least N_{gap} symbols after a last SS/PBCH block symbol, and if channelAccessMode = "semiStatic" is provided, the RO does not overlap with a set of consecutive symbols before the start of a next channel occupancy time where there are no any transmissions for the UE. In some embodiments, the candidate S S/PBCH block index of the SS/PBCH block is the SS/PBCH block index provided by ssb-PositionInBurst in SIB1 or in ServingCellConfigCommon.

In some embodiments, for a collision between PRACH transmissions and other downlink (DL) channels for half duplex (HD)-frequency division duplex (FDD): for example, for a Type A HD-FDD UE, all ROs applicable to a reduced capability (RedCap) UE are valid, and for the case of SSB overlapping with valid RO from serving cell specific point of view, it is left to UE implementation whether to receive SSB or transmit the PRACH. For example, there is no support of distinguishing of ROs for Type A HD-FDD RedCap UEs and full duplex (FD)-FDD RedCap UEs. For example, for the case of valid RO overlapping with PDCCH in a Type 0/0A/1/2 common search space (CSS) set, it is left to UE implementation whether to receive configured PDCCH or transmit PRACH. For example, for the case of valid RO overlapping with UE - dedicated configured DL reception (e.g., physical downlink control channel (PDCCH) in a UE-specific search space (USS), semi-persistent scheduling (SPS) physical downlink shared channel (PDSCH), channel state information reference signal (CSI-RS), or DL positioning reference signal (PRS)), it is left to UE implementation whether to receive the DL or transmit PRACH.

In some embodiments, for the case of the "back-to-back" non-overlapping UL/DL without sufficient gap between cell-specific configured DL and cell-specific configured UL, e.g., between SSB or a PDCCH in CSS and valid RO, it is up to UE implementation to ensure that the switching time is satisfied. The "back-to-back" non-overlapping UL/DL without sufficient gap between dedicated configured DL and cell-specific configured UL may happen, i.e., allow for HD-FDD UEs. For example, for the case of UL/DL switching without sufficient gap between PDCCH in USS, SPS PDSCH, CSI-RS, or DL PRS and valid RO, it is left to UE implementation to cancel either DL reception or UL transmission to ensure sufficient switching time.

In some embodiments, for a collision between PRACH transmissions and other DL channels or slot formats: for example, for the collision between dynamic grant (DG) PDSCH/CSI-RS and PRACH, it is up to UE implementation whether to prioritize DG PDSCH reception or PRACH transmission. In some embodiments, except for DG PDSCH, for other DL receptions, if the DL receptions would overlap with any symbol from the set of symbols, where the set of symbols is of a slot corresponding to a valid PRACH occasion and N_{gap} symbols before the valid PRACH occasion, the UE does not receive PDCCH, PDSCH, or CSI-RS in the slot. The UE does not expect the set of symbols of the slot to be indicated as DL by tdd-UL-DL-ConfigurationCommon or tdd-UL-DL-ConfigurationDedicated.

In some embodiments, for a set of symbols of a slot that are indicated to the UE as DL by tdd-UL-DL-ConfigurationCommon or tdd-UL-DL-ConfigurationDedicated, the UE does not transmit physical uplink shared channel (PUSCH), physical uplink control channel (PUCCH), PRACH, or sounding reference signal (SRS) when the PUSCH, PUCCH, PRACH, or SRS overlaps, even partially, with the set of symbols of the slot. In some embodiments, for a set of symbols of a slot that are indicated to the UE as flexible by tdd-UL-DL-ConfigurationCommon and tdd-UL-DL-ConfigurationDedicated, the UE does not expect to receive both dedicated higher layer parameters configuring UL transmission from the UE in the set of symbols of the slot and dedicated higher layer parameters configuring DL reception by the UE in the set of symbols of the slot.

In some embodiments, for operation on a single carrier in unpaired spectrum, for a set of symbols of a slot that are indicated to the UE by ssb-PositionInBurst in SIB 1 or ssb-PositionInBurst in ServingCellConfigCommon, for reception of SSB, the UE does not transmit PUSCH, PUCCH, or PRACH in the slot if a UL transmission would overlap with any symbol from the set of symbols. The UE does not expect the set of symbols of the slot to be indicated as UL by tdd-UL-DL-ConfigurationCommon or tdd-UL-DL-ConfigurationDedicated, when provided to the UE.

In some embodiments, for the collision between PRACH transmissions and other UL transmissions: for single cell operation or for operation with carrier aggregation in the same frequency band, the UE does not transmit PRACH and PUSCH/PUCCH/SRS in the same slot or when a gap between the first or last symbol of a PRACH transmission in a first slot is separated by less than N symbols from the last or first symbol, respectively, of a PUSCH/PUCCH/SRS transmission in the second slot where N=2 for µ=0 or µ=1, N=4 for µ=2 or µ=3, and µ is the SCS configuration of the active UL BWP.

In some embodiments, for PRACH transmission cancellation due to power allocation: in Case 1 (CCs/ UL carriers configured for the UE have same numerology (subcarrier spacing) and overlapping transmissions between different CCs/ ULs with the same starting time and the same PUSCH/PUCCH transmission duration), the UE is power limited due to simultaneous transmissions on multiple serving cells. Further, in this case, the transmission priorities between different CCs/channels are as follows: PRACH of primary cell (PCell) > PUCCH/PUSCH with acknowledge (ACK)/negative acknowledgement (NACK) and/or SR > PUCCH/PUSCH with other UCIs > PUSCH w/o UCI > SRS/PRACH of secondary cell (SCell); within the same priority level, PCell is prioritized over the SCell. In case that transmission power exceeds Pcmax, scaling/dropping is applied to the lowest priority channel first until the aggregated power is within Pcmax. Specifically, scaling or dropping is left to UE implementation.

In some embodiments, the UE may perform the PRACH transmission on the valid RO in the RO group. It may be understood that, if the PRACH transmission on the valid RO is canceled, how the UE performs subsequent transmission is addressed in embodiments of the disclosure. When the PRACH transmission performed by the UE on the first RO is canceled, the UE may determine to perform or cancel the PRACH transmission on the valid RO after the first RO in the first RO group. Thus, the UE may ensure that PRACH transmission is performed as successful as possible, thus reducing power consumption of the UE and shortening the access delay.

In order to better understand the method and apparatus for PRACH transmission in embodiments of the disclosure, a communication system to which embodiments of the disclosure are applicable is described below.

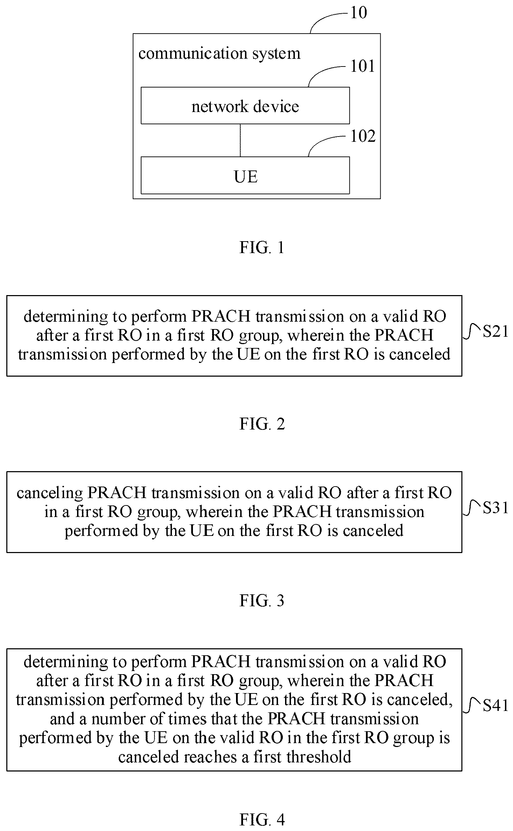

Referring to FIG. 1, it is a diagram illustrating an architecture of a communication system according to an embodiment of the disclosure. The communication system may include, but is not limited to, one network device and one UE. The number and forms of the devices illustrated in FIG. 1 are only for example and do not constitute a limitation to embodiments of the disclosure, and two or more network side devices and two or more UEs may be included in practical applications. The communication system as illustrated in FIG. 1 includes one network device 101, and one UE 102 for example.

It needs to be noted that the technical solution in embodiments of the disclosure is applicable to various communication systems, such as a long term evolution (LTE) system, a 5th generation (5G) mobile communication system, a 5G new radio (NR) system or other future new mobile communication systems.

The network device 101 in embodiments of the disclosure may be an entity at a network side for transmitting or receiving a signal. For example, the network device may be an access network device such as a base station. The base station may be a base transceiver station (BTS) in a global system for mobile communications (GSM) system, a BTS in a code division multiple access (CDMA) system, a base station in a wideband code division multiple access (WCDMA) system, an evolved NB (eNB or eNodeB) in an LTE system, a next generation NodeB (gNB) in a 5th generation mobile communication system, a gNB in a 6th generation mobile communication system, or a base stations in a future mobile communication system, etc. A specific technology and a specific device form adopted by the network device are not limited in embodiments of the disclosure. For example, the network device may also be a module or a unit that implements some functions of a base station. For example, the network device may be a central unit (CU), or a distributed unit (DU). The CU and DU respectively implement part of the protocol stack functions of the base station. Further, the functions of the CU may be implemented by a plurality of entities. For example, the functions of the control plane (CP) and user plane (UP) of the CU may be separated, forming a CU-CP and a CU-UP. For example, the CU-CP and the CU-UP may be implemented by different functional entities, connected via an E1 interface, and the CU-CP and CU-UP may be coupled with the DU.

The UE 102 in embodiments of the disclosure is an entity, at a user side, for receiving or transmitting a signal, for example, a mobile phone. The UE may be referred to as a terminal, a mobile station (MS), a mobile terminal (MT), etc. The UE may be a device with a communication function, such as a vehicle, a smart vehicle, a mobile phone, a wearable device, a tablet computer (Pad), a computer with a wireless transceiving function, a virtual reality (VR) UE, an augmented reality (AR) UE, a wireless UE in industrial control, a wireless UE in self-driving, a wireless UE in a remote medical surgery, a wireless UE in a smart grid, a wireless UE in transportation safety, a wireless UE in a smart home, etc. A specific technology and a specific device form adopted by the UE are not limited in embodiments of the disclosure.

In embodiments of the disclosure, the network device may send configuration information to the UE. The configuration information indicates a valid RO in a first RO group for performing PRACH transmission. The UE may receive the configuration information sent by the network device, and determine the valid RO in the first RO group. Further, in a case that the PRACH transmission on the first RO is canceled, the UE may determine to perform the PRACH transmission on a valid RO after a first RO in a first RO group; or cancel the PRACH transmission on a valid RO after a first RO in a first RO group.

In embodiments of the disclosure, the network device may further send indication information to the UE. The indication information instructs the UE to perform transmission of a specific channel or a signal on the first RO. The UE receives the indication information sent by the network device, and determines to cancel the PRACH transmission on the first RO.

It may be understood that the communication system described in embodiments of the disclosure is intended to explain technical solutions of embodiments of the disclosure more clearly, and does not constitute a limitation to the technical solutions according to embodiments of the disclosure. Those skilled in the art know that, with evolution of a system architecture and emergence of a new service scenario, the technical solutions according to embodiments of the disclosure are also applied to similar technical problems.

The method and apparatus for PRACH transmission in the disclosure are further described in combination with the attached figures.

Referring to FIG. 2, it is a flowchart illustrating a method for PRACH transmission according to an embodiment of the disclosure. As shown in FIG. 2, the method is performed by a UE and may include, but is not limited to, the following step S21.

At S21, PRACH transmission is determined to be performed on a valid RO after a first RO in a first RO group, in which the PRACH transmission performed by the UE on the first RO is canceled.

In embodiments of the disclosure, in a case that the PRACH transmission performed by the UE on the first RO is canceled, the UE may determine to perform the PRACH transmission on the valid RO after the first RO in the first RO group. Thus, the UE may ensure that the PRACH transmission is performed as successful as possible, thus reducing power consumption of the UE and shortening the access delay.

For example, the first RO group includes four valid ROs, and the first RO is the second one of the four valid ROs. In a case that the PRACH transmission performed by the UE on the first RO is canceled, the UE may determine to continue performing the PRACH transmission on the third valid RO and/or the fourth valid RO after the second valid RO in the first RO group.

In embodiments of the disclosure, the PRACH transmission performed by the UE on the first RO may be canceled due to a power allocation issue or a transmission collision or reception collision with another channel.

In some embodiments, in response to a resource collision between the PRACH transmission on the valid RO and transmission of a specific channel or a signal, the UE performs the PRACH transmission on the valid RO.

In embodiments of the disclosure, in the case that the resource collision occurs between the PRACH transmission on the valid RO and transmission of the specific channel or a signal, the UE may perform the PRACH transmission on the valid RO.

In some embodiments, the transmission of the specific channel or the signal includes at least one of: SSB transmission; cell-level semi-static DL channel reception; UE-level semi-static DL reception; dynamic DL reception; SRS transmission; PUCCH transmission; or PUSCH transmission.

In embodiments of the disclosure, in a case that the UE needs to simultaneously perform the PRACH transmission and the SSB transmission on the valid RO, the UE performs the PRACH transmission on the valid RO and drops/discards the SSB transmission.

In embodiments of the disclosure, in a case that the UE needs to simultaneously perform the PRACH transmission and the cell-level semi-static DL channel reception on the valid RO, the UE performs the PRACH transmission on the valid RO and drops the cell-level semi-static DL channel reception.

In embodiments of the disclosure, in a case that the UE needs to simultaneously perform the PRACH transmission and the UE-level semi-static DL reception on the valid RO, the UE performs the PRACH transmission on the valid RO and drops the UE-level semi-static DL reception.

In embodiments of the disclosure, in a case that the UE needs to simultaneously perform the PRACH transmission and the dynamic DL reception on the valid RO, the UE performs the PRACH transmission on the valid RO and drops the dynamic DL reception.

In embodiments of the disclosure, in a case that the UE needs to simultaneously perform the PRACH transmission and the SRS transmission on the valid RO, the UE performs the PRACH transmission on the valid RO and drops the SRS transmission.

In embodiments of the disclosure, in a case that the UE needs to simultaneously perform the PRACH transmission and the PUCCH transmission on the valid RO, the UE performs the PRACH transmission on the valid RO and drops the PUCCH transmission.

In embodiments of the disclosure, in a case that the UE needs to simultaneously perform the PRACH transmission and the PUSCH transmission on the valid RO, the UE performs the PRACH transmission on the valid RO and drops the PUSCH transmission.

It should be noted that the above embodiments are not exhaustive but only illustrative of some embodiments. Further, the above embodiments may be implemented individually or in any combination. The above embodiments are merely illustrative and do not specifically limit the protection scope of the embodiments of the disclosure.

In some embodiments, the UE operates in a time division duplex (TDD) band or a frequency division duplex (FDD) band, or the UE is a half duplex (HD) UE or a full duplex (FD) UE.

In embodiments of the disclosure, the UE may operate in a TDD band, or the UE may operate in a FDD band.

In embodiments of the disclosure, the UE may be a HD UE, or the UE may be a FD UE.

For example, for an HD-FDD UE and a TDD band, to improve the PRACH coverage, for multiple PRACH transmissions, if there is a collision between the PRACH transmission on the valid RO and reception of a specific DL channel, the PRACH transmission may be prioritized.

For example, for any type of UE, to improve the PRACH coverage, when there is resource overlapping between the PRACH transmission on a valid RO and another UL channel transmission (SRS transmission/PUSCH transmission/PUCCH transmission), the PRACH transmission may be prioritized.

In this embodiment or other embodiments, without conflict, the various steps may be performed independently, in any combination, or in any order; optional methods or examples may be combined arbitrarily, and may be combined arbitrarily with other embodiments or examples.

By implementing the embodiments of the disclosure, the UE determines to perform the PRACH transmission on the valid RO after the first RO in the first RO group, in which the PRACH transmission performed by the UE on the first RO is canceled. Thus, the UE may ensure that the PRACH transmission is performed as successful as possible, thus reducing power consumption of the UE and shortening the access delay.

Referring to FIG. 3, it is a flowchart illustrating another method for PRACH transmission according to an embodiment of the disclosure. As shown in FIG. 3, the method is performed by a UE and may include, but is not limited to, the following step 31.

At step 31, PRACH transmission is canceled on a valid RO after a first RO in a first RO group, in which the PRACH transmission performed by the UE on the first RO is canceled.

In embodiments of the disclosure, in a case that the PRACH transmission performed by the UE on the first RO is canceled, the UE may cancel the PRACH transmission on the valid RO after the first RO in the first RO group.

For example, the first RO group includes four valid ROs, and the first RO is the second one of the four valid ROs. In a case that the PRACH transmission performed by the UE on the first RO is canceled, the UE may cancel the PRACH transmission on the valid RO (e.g., the third valid RO or the fourth valid RO) after the second valid RO in the first RO group.

It may be understood that the valid ROs in the first RO group are relatively close to each other. In embodiments of the disclosure, in a case that the UE cancels the PRACH transmission on the valid RO after the first RO in the first RO group, the UE may select a valid RO in the RO group after the first RO group to perform the PRACH transmission. Thus, the UE may ensure that the PRACH transmission is performed as successful as possible, thus reducing power consumption of the UE and shortening the access delay.

In embodiments of the disclosure, the PRACH transmission performed by the UE on the first RO may be canceled due to a power allocation issue or a transmission collision or reception collision with another channel.

In some embodiments, in response to a resource collision between the PRACH transmission on the valid RO and transmission of a specific channel or a signal, the UE performs the PRACH transmission on the valid RO.

In embodiments of the disclosure, in the case that the resource collision between the PRACH transmission on the valid RO and transmission of the specific channel or the signal, the UE may perform the PRACH transmission on the valid RO.

In some embodiments, the transmission of the specific channel or the signal includes at least one of: SSB transmission; cell-level semi-static DL channel reception; UE-level semi-static DL reception; dynamic DL reception; SRS transmission; PUCCH transmission; or PUSCH transmission.

In embodiments of the disclosure, in a case that the UE needs to simultaneously perform the PRACH transmission and the SSB transmission on the valid RO, the UE performs the PRACH transmission on the valid RO and drops the SSB transmission.

In embodiments of the disclosure, in a case that the UE needs to simultaneously perform the PRACH transmission and the cell-level semi-static DL channel reception on the valid RO, the UE performs the PRACH transmission on the valid RO and drops the cell-level semi-static DL channel reception.

In embodiments of the disclosure, in a case that the UE needs to simultaneously perform the PRACH transmission and the UE-level semi-static DL reception on the valid RO, the UE performs the PRACH transmission on the valid RO and drops the UE-level semi-static DL reception.

In embodiments of the disclosure, in a case that the UE needs to simultaneously perform the PRACH transmission and the dynamic DL reception on the valid RO, the UE performs the PRACH transmission on the valid RO and drops the dynamic DL reception.

In embodiments of the disclosure, in a case that the UE needs to simultaneously perform the PRACH transmission and the SRS transmission on the valid RO, the UE performs the PRACH transmission on the valid RO and drops the SRS transmission.

In embodiments of the disclosure, in a case that the UE needs to simultaneously perform the PRACH transmission and the PUCCH transmission on the valid RO, the UE performs the PRACH transmission on the valid RO and drops the PUCCH transmission.

In embodiments of the disclosure, in a case that the UE needs to simultaneously perform the PRACH transmission and the PUSCH transmission on the valid RO, the UE performs the PRACH transmission on the valid RO and drops the PUSCH transmission.

It should be noted that the above embodiments are not exhaustive but only illustrative of some embodiments. Further, the above embodiments may be implemented individually or in any combination. The above embodiments are merely illustrative and do not specifically limit the protection scope of the embodiments of the disclosure.

In some embodiments, the UE operates in a TDD band or a FDD band, or the UE is a HD UE or a FD UE.

In embodiments of the disclosure, the UE may operate in a TDD band, or the UE may operate in a FDD band.

In embodiments of the disclosure, the UE may be a HD UE, or the UE may be a FD UE.

For example, for an HD-FDD UE and a TDD band, to improve the PRACH coverage, for multiple PRACH transmissions, if there is a collision between the PRACH transmission on the valid RO and reception of a specific DL channel, the PRACH transmission may be prioritized.

For example, for any type of UE, to improve the PRACH coverage, when there is resource overlapping between the PRACH transmission on a valid RO and another UL channel transmission (SRS transmission/PUSCH transmission/PUCCH transmission), the PRACH transmission may be prioritized.

In this embodiment or other embodiments, without conflict, the various steps may be performed independently, in any combination, or in any order; optional methods or examples may be combined arbitrarily, and may be combined arbitrarily with other embodiments or examples.

By implementing the embodiments of the disclosure, the UE cancels the PRACH transmission on the valid RO after the first RO in the first RO group, in which the PRACH transmission performed by the UE on the first RO is canceled. Thus, the UE may ensure that the PRACH transmission is performed as successful as possible, thus reducing power consumption of the UE and shortening the access delay.

Referring to FIG. 4, it is a flowchart illustrating another method for PRACH transmission according to an embodiment of the disclosure. As shown in FIG. 4, the method is performed by a UE and may include, but is not limited to, the following step S41.

At S41, PRACH transmission is determined to be performed on a valid RO after a first RO in a first RO group, in which the PRACH transmission performed by the UE on the first RO is canceled, and a number of times that the PRACH transmission performed by the UE on the valid RO in the first RO group is canceled reaches a first threshold.

In embodiments of the disclosure, in a case that the number of times that the PRACH transmission performed by the UE on the valid RO in the first RO group is canceled reaches the first threshold, and the PRACH transmission performed by the UE on the first RO in the first RO group is canceled, the UE determines to perform the PRACH transmission on the valid RO after the first RO in the first RO group.

In some embodiments, in a case that the number of times that the PRACH transmission performed by the UE on the valid RO in the first RO group is canceled is less than the first threshold, the UE may continue the PRACH transmission on the valid RO after the first RO in the first RO group.

In some embodiments, the UE may determine the first threshold based on implementation.

In some embodiments, the UE determines the first threshold abased on a protocol agreement; or receives indication information sent by a network device, and determines the first threshold based on the indication information.

In embodiments of the disclosure, the UE may determine the first threshold based on the protocol agreement.

In embodiments of the disclosure, the UE may receive the indication information sent by the network device, and determine the first threshold based on the indication information.

In some embodiments, the first threshold is related to a number of valid ROs in the first RO group.

In embodiments of the disclosure, the first threshold may be related to the number of valid ROs in the first RO group.

For example, the first threshold may be the number of valid ROs in the first RO group, or may be a quotient of the number of valid ROs in the first RO group and a specific value, and so on.

For example, the protocol specifies that the first threshold = M/N, where N is the specific value, and M is the number of valid ROs in the first RO group, for example, M=4, N=2, etc. When M < N, the value of the first threshold is 1.

It should be noted that, in embodiments of the disclosure, the method for determining the first threshold may be the same or different for RO groups with different numbers of ROs.

For example, if an RO group includes 2 ROs, the threshold is determined as P; if an RO group includes 4 ROs, the threshold is determined as Q; if an RO group includes 8 ROs, the threshold is determined as K; in which any two of P, Q, and K may be the same or different.

In this embodiment or other embodiments, without conflict, the various steps may be performed independently, in any combination, or in any order; optional methods or examples may be combined arbitrarily, and may be combined arbitrarily with other embodiments or examples.

It should be noted that, in embodiments of the disclosure, S41 may be implemented alone or in combination with any other step in the embodiments of the disclosure, such as in combination with S21 of the embodiments of the disclosure, which is not limited in the embodiments of the disclosure.

By implementing the embodiments of the disclosure, the UE determines to perform the PRACH transmission on the valid RO after the first RO in the first RO group, in which the PRACH transmission performed by the UE on the first RO is canceled, and the number of times that the PRACH transmission performed by the UE on the valid RO in the first RO group is canceled reaches the first threshold. Thus, the UE may ensure that the PRACH transmission is performed as successful as possible, thus reducing power consumption of the UE and shortening the access delay.

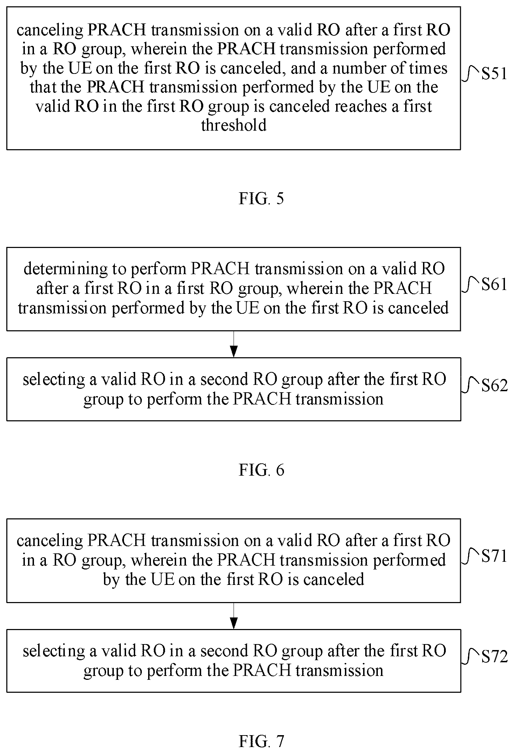

Referring to FIG. 5, it is a flowchart illustrating another method for PRACH transmission according to an embodiment of the disclosure. As shown in FIG. 5, the method is performed by a UE and may include, but is not limited to, the following step S51.

At S51, PRACH transmission is canceled on a valid RO after a first RO in a first RO group, in which the PRACH transmission performed by the UE on the first RO is canceled, and a number of times that the PRACH transmission performed by the UE on the valid RO in the first RO group is canceled reaches a first threshold.

In some embodiments, in a case that the number of times that the PRACH transmission performed by the UE on the valid RO in the first RO group is canceled is less than the first threshold, the UE may continue the PRACH transmission on the valid RO after the first RO in the first RO group.

In embodiments of the disclosure, in a case that the number of times that the PRACH transmission performed by the UE on the valid RO in the first RO group is canceled reaches the first threshold, and the PRACH transmission performed by the UE on the first RO in the first RO group is canceled, the UE cancels the PRACH transmission on the valid RO after the first RO in the first RO group.

In some embodiments, the UE may determine the first threshold based on implementation.

In some embodiments, the UE determines the first threshold abased on a protocol agreement; or receives indication information sent by a network device, and determines the first threshold based on the indication information.

In embodiments of the disclosure, the UE may determine the first threshold based on the protocol agreement.

In embodiments of the disclosure, the UE may receive the indication information sent by the network device, and determine the first threshold based on the indication information.

In some embodiments, the first threshold is related to a number of valid ROs in the first RO group.

In embodiments of the disclosure, the first threshold may be related to the number of valid ROs in the first RO group.

For example, the first threshold may be the number of valid ROs in the first RO group, or may be a quotient of the number of valid ROs in the first RO group and a specific value, and so on.

For example, the protocol specifies that the first threshold = M/N, where N is the specific value, and M is the number of valid ROs in the first RO group, for example, M=4, N=2, etc. When M < N, the value of the first threshold is 1.

It should be noted that, in embodiments of the disclosure, the method for determining the first threshold may be the same or different for RO groups with different numbers of ROs.

For example, if an RO group includes 2 ROs, the threshold is determined as P; if an RO group includes 4 ROs, the threshold is determined as Q; if an RO group includes 8 ROs, the threshold is determined as K; in which any two of P, Q, and K may be the same or different.

In this embodiment or other embodiments, without conflict, the various steps may be performed independently, in any combination, or in any order; optional methods or examples may be combined arbitrarily, and may be combined arbitrarily with other embodiments or examples.

It should be noted that, in embodiments of the disclosure, S51 may be implemented alone or in combination with any other step in the embodiments of the disclosure, such as in combination with S21 of the embodiments of the disclosure, which is not limited in the embodiments of the disclosure.

By implementing the embodiments of the disclosure, the UE cancels the PRACH transmission on the valid RO after the first RO in the first RO group, in which the PRACH transmission performed by the UE on the first RO is canceled, and the number of times that the PRACH transmission performed by the UE on the valid RO in the first RO group is canceled reaches the first threshold. Thus, the UE may ensure that the PRACH transmission is performed as successful as possible, thus reducing power consumption of the UE and shortening the access delay.

Referring to FIG. 6, it is a flowchart illustrating another method for PRACH transmission according to an embodiment of the disclosure. As shown in FIG. 6, the method is performed by a UE and may include, but is not limited to, the following steps S61 to S62.

At S61, PRACH transmission is determined to be performed on a valid RO after a first RO in a first RO group, in which the PRACH transmission performed by the UE on the first RO is canceled.

For related descriptions of S61 reference may be made to the related descriptions in the above embodiments, which are not repeated herein.

At S62, a valid RO in a second RO group after the first RO group is selected to perform the PRACH transmission.

In embodiments of the disclosure, in a case that the PRACH transmission performed by the UE on the first RO is canceled, the UE may determine to perform the PRACH transmission on the valid RO after the first RO in the first RO group, and selects the valid RO in the second RO group after the first RO group to perform the PRACH transmission. Thus, the UE may ensure that the PRACH transmission is performed as successful as possible, thus reducing power consumption of the UE and shortening the access delay.

It may be understood that the UE selects the valid RO in the second RO group after the first RO group to perform the PRACH transmission. In particular, the UE may select one or more valid ROs in one or more second RO groups after the first RO group to perform the PRACH transmission.

In some embodiments, selecting by the UE, the valid RO in the second RO group after the first RO group to perform the PRACH transmission may include: selecting the valid RO in the second RO group after the first RO group to perform the PRACH transmission until a specific condition is satisfied.

The specific condition includes at least one of: the PRACH transmission being not canceled; a random access response (RAR) sent by a network device being received; or a number of PRACH transmissions reaching a second threshold.

In embodiments of the disclosure, the specific condition may be that the PRACH transmission is not canceled. For example, the PRACH transmission on any valid RO in the second RO group is not canceled, or the PRACH transmission on any valid RO after the first RO in the first RO group is not canceled.

For example, in a case that the PRACH transmission performed by the UE on the first RO is canceled, the UE determines to perform the PRACH transmission on the valid RO after the first RO in the first RO group, and selects the valid RO in the second RO group after the first RO group to perform the PRACH transmission, until it is satisfied that the PRACH transmission is not canceled.

In embodiments of the disclosure, the specific condition may be that the RAR sent by the network device is received.

For example, in a case that the PRACH transmission performed by the UE on the first RO is canceled, the UE determines to perform the PRACH transmission on the valid RO after the first RO in the first RO group, and selects the valid RO in the second RO group after the first RO group to perform the PRACH transmission, until it is satisfied that the RAR is received from the network device.

In embodiments of the disclosure, the specific condition may be that the number of PRACH transmissions reaches the second threshold.

For example, in a case that the PRACH transmission performed by the UE on the first RO is canceled, the UE determines to perform the PRACH transmission on the valid RO after the first RO in the first RO group, and selects the valid RO in the second RO group after the first RO group to perform the PRACH transmission, until it is satisfied that the number of PRACH transmissions reaches the second threshold.

It may be understood that the number of PRACH transmissions reaching the second threshold may mean that the number of times the UE performs the PRACH transmission on the valid RO in the first RO group reaches the second threshold, or may mean that the number of times the UE performs the PRACH transmission on the valid ROs in the first RO group and the second RO group reaches the second threshold, and so on.

The number of PRACH transmissions reaching the second threshold may mean that the number of times the UE performs the PRACH transmission on the valid ROs in all RO groups reaches the second threshold.

In some embodiments, the UE may determine the second threshold based on a protocol agreement, or may determine the second threshold based on an indication from the network device, or may determine the second threshold based on implementation.

In some embodiments, the second threshold is a number of valid ROs in the first RO group.

In embodiments of the disclosure, the second threshold is the number of valid ROs in the first RO group.

For example, if the number of valid ROs in the first RO group is 5, the second threshold may be determined as 5.

In some embodiments, the valid ROs in the first RO group and the second RO group are associated with same or different SSBs.

In embodiments of the disclosure, the valid ROs in the first RO group and the second RO group may be associated with the same or different SSBs.

It may be understood that, in a case that the valid ROs in the first RO group and the second RO group are associated with the same SSB, when the UE selects the valid RO in the second RO group after the first RO group to perform the PRACH transmission, the UE needs to select an RO group whose valid ROs are associated with the same SSB as the valid ROs in the first RO group, as the second RO group.

In some embodiments, the number of valid ROs in the first RO group may be the same as or different from the number of valid ROs in the second RO group.

In some embodiments, a number of PRACH transmissions on the valid ROs in the first RO group may be the same as or different from a number of PRACH transmissions on the valid ROs in the second RO group.

In this embodiment or other embodiments, without conflict, the various steps may be performed independently, in any combination, or in any order; optional methods or examples may be combined arbitrarily, and may be combined arbitrarily with other embodiments or examples.

It should be noted that, in embodiments of the disclosure, S61 may be implemented alone or in combination with any other step in the embodiments of the disclosure, such as in combination with S21 and/or S41 of the embodiments of the disclosure, which is not limited in the embodiments of the disclosure.

By implementing the embodiments of the disclosure, the UE determines to perform the PRACH transmission on the valid RO after the first RO in the first RO group, in which the PRACH transmission performed by the UE on the first RO is canceled, and selects the valid RO in the second RO group after the first RO group to perform the PRACH transmission. Thus, the UE may ensure that the PRACH transmission is performed as successful as possible, thus reducing power consumption of the UE and shortening the access delay.

Referring to FIG. 7, it is a flowchart illustrating another method for PRACH transmission according to an embodiment of the disclosure. As shown in FIG. 7, the method is performed by a UE and may include, but is not limited to, the following steps S71 to S72.

At S71, PRACH transmission on a valid RO after a first RO in a first RO group is canceled, in which the PRACH transmission performed by the UE on the first RO is canceled.

For related descriptions of S71 reference may be made to the related descriptions in the above embodiments, which are not repeated herein.

At S72, a valid RO in a second RO group after the first RO group is selected to perform the PRACH transmission.

In embodiments of the disclosure, in a case that the PRACH transmission performed by the UE on the first RO is canceled, the UE cancels the PRACH transmission on the valid RO after the first RO in the first RO group, and selects the valid RO in the second RO group after the first RO group to perform the PRACH transmission. Thus, the UE may ensure that the PRACH transmission is performed as successful as possible, thus reducing power consumption of the UE and shortening the access delay.

It may be understood that the UE selects the valid RO in the second RO group after the first RO group to perform the PRACH transmission. In particular, the UE may select one or more valid ROs in one or more second RO groups after the first RO group to perform the PRACH transmission.

In some embodiments, selecting by the UE, the valid RO in the second RO group after the first RO group to perform the PRACH transmission may include: selecting the valid RO in the second RO group after the first RO group to perform the PRACH transmission until a specific condition is satisfied.

The specific condition includes at least one of: the PRACH transmission being not canceled; an RAR sent by a network device being received; or a number of PRACH transmissions reaching a second threshold.

In embodiments of the disclosure, the specific condition may be that the PRACH transmission is not canceled. For example, the PRACH transmission on any valid RO in the second RO group is not canceled, or the PRACH transmission on any valid RO after the first RO in the first RO group is not canceled.

For example, in a case that the PRACH transmission performed by the UE on the first RO is canceled, the UE cancels the PRACH transmission on the valid RO after the first RO in the first RO group, and selects the valid RO in the second RO group after the first RO group to perform the PRACH transmission, until it is satisfied that the PRACH transmission is not canceled.

In embodiments of the disclosure, the specific condition may be that the RAR sent by the network device is received.

For example, in a case that the PRACH transmission performed by the UE on the first RO is canceled, the UE cancels the PRACH transmission on the valid RO after the first RO in the first RO group, and selects the valid RO in the second RO group after the first RO group to perform the PRACH transmission, until it is satisfied that the RAR is received from the network device.

In embodiments of the disclosure, the specific condition may be that the number of PRACH transmissions reaches the second threshold.

For example, in a case that the PRACH transmission performed by the UE on the first RO is canceled, the UE cancels the PRACH transmission on the valid RO after the first RO in the first RO group, and selects the valid RO in the second RO group after the first RO group to perform the PRACH transmission, until it is satisfied that the number of PRACH transmissions reaches the second threshold.

It may be understood that the number of PRACH transmissions reaching the second threshold may mean that the number of times the UE performs the PRACH transmission on the valid RO in the first RO group reaches the second threshold, or may mean that the number of times the UE performs the PRACH transmission on the valid ROs in the first RO group and the second RO group reaches the second threshold, and so on.

The number of PRACH transmissions reaching the second threshold may mean that the number of times the UE performs the PRACH transmission on the valid ROs in all RO groups reaches the second threshold.

In some embodiments, the UE may determine the second threshold based on a protocol agreement, or may determine the second threshold based on an indication from the network device, or may determine the second threshold based on implementation.

In some embodiments, the second threshold is a number of valid ROs in the first RO group.

In embodiments of the disclosure, the second threshold is the number of valid ROs in the first RO group.

For example, if the number of valid ROs in the first RO group is 5, the second threshold may be determined as 5.

In some embodiments, the valid ROs in the first RO group and the second RO group are associated with same or different SSBs.

In embodiments of the disclosure, the valid ROs in the first RO group and the second RO group may be associated with same or different SSBs.

It may be understood that, in a case that the valid ROs in the first RO group and the second RO group are associated with the same SSB, when the UE selects the valid RO in the second RO group after the first RO group to perform the PRACH transmission, the UE needs to select an RO group whose valid ROs are associated with the same SSB as the valid ROs in the first RO group, as the second RO group.

In some embodiments, the number of valid ROs in the first RO group may be the same as or different from the number of valid ROs in the second RO group.

In some embodiments, a number of PRACH transmissions on the valid ROs in the first RO group may be the same as or different from a number of PRACH transmissions on the valid ROs in the second RO group.

In this embodiment or other embodiments, without conflict, the various steps may be performed independently, in any combination, or in any order; optional methods or examples may be combined arbitrarily, and may be combined arbitrarily with other embodiments or examples.

It should be noted that, in embodiments of the disclosure, S71 may be implemented alone or in combination with any other step in the embodiments of the disclosure, such as in combination with S31 and/or S51 of the embodiments of the disclosure, which is not limited in the embodiments of the disclosure.

By implementing the embodiments of the disclosure, the UE cancels the PRACH transmission on the valid RO after the first RO in the first RO group, in which the PRACH transmission performed by the UE on the first RO is canceled, and selects the valid RO in the second RO group after the first RO group to perform the PRACH transmission. Thus, the UE may ensure that the PRACH transmission is performed as successful as possible, thus reducing power consumption of the UE and shortening the access delay.

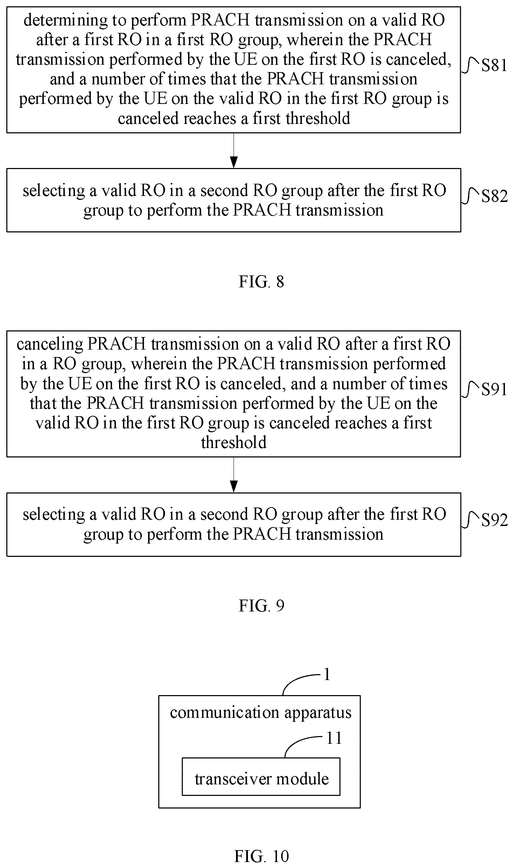

Referring to FIG. 8, it is a flowchart illustrating another method for PRACH transmission according to an embodiment of the disclosure. As shown in FIG. 8, the method is performed by a UE and may include, but is not limited to, the following steps S81 to S82.

At S81, PRACH transmission is determined to be performed on a valid RO after a first RO in a first RO group, in which the PRACH transmission performed by the UE on the first RO is canceled, and a number of times that the PRACH transmission performed by the UE on the valid RO in the first RO group is canceled reaches a first threshold.

For related descriptions of S81 reference may be made to the related descriptions in the above embodiments, which are not repeated herein.

At S82, a valid RO in a second RO group after the first RO group is selected to perform the PRACH transmission.

In embodiments of the disclosure, in a case that the PRACH transmission performed by the UE on the first RO is canceled and the number of times that the PRACH transmission performed by the UE on the valid RO in the first RO group is canceled reaches the first threshold, the UE determines to perform the PRACH transmission on the valid RO after the first RO in the first RO group, and selects the valid RO in the second RO group after the first RO group to perform the PRACH transmission. Thus, the UE may ensure that the PRACH transmission is performed as successful as possible, thus reducing power consumption of the UE and shortening the access delay.

It may be understood that the UE selects the valid RO in the second RO group after the first RO group to perform the PRACH transmission, and may select one or more valid ROs in one or more second RO groups after the first RO group to perform the PRACH transmission.

In some embodiments, selecting by the UE, the valid RO in the second RO group after the first RO group to perform the PRACH transmission may include: selecting the valid RO in the second RO group after the first RO group to perform the PRACH transmission until a specific condition is satisfied.

The specific condition includes at least one of: the PRACH transmission being not canceled; an RAR sent by a network device being received; or a number of PRACH transmissions reaching a second threshold.

In embodiments of the disclosure, the specific condition may be that the PRACH transmission is not canceled. For example, the PRACH transmission on any valid RO in the second RO group is not canceled, or the PRACH transmission on any valid RO after the first RO in the first RO group is not canceled.

For example, in a case that the PRACH transmission performed by the UE on the first RO is canceled and the number of times that the PRACH transmission performed by the UE on the valid RO in the first RO group is canceled reaches the first threshold, the UE determines to perform the PRACH transmission on the valid RO after the first RO in the first RO group, and selects the valid RO in the second RO group after the first RO group to perform the PRACH transmission, until it is satisfied that the PRACH transmission is not canceled.

In embodiments of the disclosure, the specific condition may be that the RAR sent by the network device is received.

For example, in a case that the PRACH transmission performed by the UE on the first RO is canceled, the UE determines to perform the PRACH transmission on the valid RO after the first RO in the first RO group, and selects the valid RO in the second RO group after the first RO group to perform the PRACH transmission, until it is satisfied that the RAR is received from the network device.

In embodiments of the disclosure, the specific condition may be that the number of PRACH transmissions reaches the second threshold.

For example, in a case that the PRACH transmission performed by the UE on the first RO is canceled and the number of times that the PRACH transmission performed by the UE on the valid RO in the first RO group is canceled reaches the first threshold, the UE determines to perform the PRACH transmission on the valid RO after the first RO in the first RO group, and selects the valid RO in the second RO group after the first RO group to perform the PRACH transmission, until it is satisfied that the number of PRACH transmissions reaches the second threshold.

It may be understood that the number of PRACH transmissions reaching the second threshold may mean that the number of times the UE performs the PRACH transmission on the valid RO in the first RO group reaches the second threshold, or may mean that the number of times the UE performs the PRACH transmission on the valid ROs in the first RO group and the second RO group reaches the second threshold, and so on.

The number of PRACH transmissions reaching the second threshold may mean that the number of times the UE performs the PRACH transmission on the valid ROs in all RO groups reaches the second threshold.

In some embodiments, the UE may determine the second threshold based on a protocol agreement, or may determine the second threshold based on an indication from the network device, or may determine the second threshold based on implementation.

In some embodiments, the second threshold is a number of valid ROs in the first RO group, or the second threshold is a total number of valid ROs in the first RO group and the second RO group.

In embodiments of the disclosure, the second threshold is the number of valid ROs in the first RO group.

For example, if the number of valid ROs in the first RO group is 5, the second threshold may be determined as 5.

In some embodiments, the valid ROs in the first RO group and the second RO group are associated with same or different SSBs.

In embodiments of the disclosure, the valid ROs in the first RO group and the second RO group may be associated with the same or different SSBs.

It may be understood that, in a case that the valid ROs in the first RO group and the second RO group are associated with the same SSB, when the UE selects the valid RO in the second RO group after the first RO group to perform the PRACH transmission, the UE needs to select an RO group whose valid ROs are associated with the same SSB as the valid ROs in the first RO group, as the second RO group.

In some embodiments, the number of valid ROs in the first RO group may be the same as or different from the number of valid ROs in the second RO group.

In some embodiments, a number of PRACH transmissions on the valid ROs in the first RO group may be the same as or different from a number of PRACH transmissions on the valid ROs in the second RO group.

In this embodiment or other embodiments, without conflict, the various steps may be performed independently, in any combination, or in any order; optional methods or examples may be combined arbitrarily, and may be combined arbitrarily with other embodiments or examples.

It should be noted that, in embodiments of the disclosure, S81 may be implemented alone or in combination with any other step in the embodiments of the disclosure, such as in combination with S21 and/or S41 of the embodiments of the disclosure, which is not limited in the embodiments of the disclosure.

By implementing the embodiments of the disclosure, the UE determines to perform the PRACH transmission on the valid RO after the first RO in the first RO group, in which the PRACH transmission performed by the UE on the first RO is canceled, and the number of times that the PRACH transmission performed by the UE on the valid RO in the first RO group is canceled reaches the first threshold, and selects the valid RO in the second RO group after the first RO group to perform the PRACH transmission. Thus, the UE may ensure that the PRACH transmission is performed as successful as possible, thus reducing power consumption of the UE and shortening the access delay.

Referring to FIG. 9, it is a flowchart illustrating another method for PRACH transmission according to an embodiment of the disclosure. As shown in FIG. 9, the method is performed by a UE and may include, but is not limited to, the following steps S91 to S92.

At S91, PRACH transmission on a valid RO after a first RO in a first RO group is canceled, in which the PRACH transmission performed by the UE on the first RO is canceled, and a number of times that the PRACH transmission performed by the UE on the valid RO in the first RO group is canceled reaches a first threshold.

For related descriptions of S91 reference may be made to the related descriptions in the above embodiments, which are not repeated herein.

At S92, a valid RO in a second RO group after the first RO group is selected to perform the PRACH transmission.

In embodiments of the disclosure, in a case that the PRACH transmission performed by the UE on the first RO is canceled and the number of times that the PRACH transmission performed by the UE on the valid RO in the first RO group is canceled reaches the first threshold, the UE cancels the PRACH transmission on the valid RO after the first RO in the first RO group, and selects the valid RO in the second RO group after the first RO group to perform the PRACH transmission. Thus, the UE may ensure that the PRACH transmission is performed as successful as possible, thus reducing power consumption of the UE and shortening the access delay.

It may be understood that the UE selects the valid RO in the second RO group after the first RO group to perform the PRACH transmission, and may select one or more valid ROs in one or more second RO groups after the first RO group to perform the PRACH transmission.

In some embodiments, selecting by the UE, the valid RO in the second RO group after the first RO group to perform the PRACH transmission may include: selecting the valid RO in the second RO group after the first RO group to perform the PRACH transmission until a specific condition is satisfied.

The specific condition includes at least one of: the PRACH transmission being not canceled; an RAR sent by a network device being received; or a number of PRACH transmissions reaching a second threshold.

In embodiments of the disclosure, the specific condition may be that the PRACH transmission is not canceled. For example, the PRACH transmission on any valid RO in the second RO group is not canceled, or the PRACH transmission on any valid RO after the first RO in the first RO group is not canceled.

For example, in a case that the PRACH transmission performed by the UE on the first RO is canceled and the number of times that the PRACH transmission performed by the UE on the valid RO in the first RO group is canceled reaches the first threshold, the UE cancels the PRACH transmission on the valid RO after the first RO in the first RO group, and selects the valid RO in the second RO group after the first RO group to perform the PRACH transmission, until it is satisfied that the PRACH transmission is not canceled.

In embodiments of the disclosure, the specific condition may be that the RAR sent by the network device is received.

For example, in a case that the PRACH transmission performed by the UE on the first RO is canceled and the number of times that the PRACH transmission performed by the UE on the valid RO in the first RO group is canceled reaches the first threshold, the UE cancels the PRACH transmission on the valid RO after the first RO in the first RO group, and selects the valid RO in the second RO group after the first RO group to perform the PRACH transmission, until it is satisfied that the RAR is received from the network device.

In embodiments of the disclosure, the specific condition may be that the number of PRACH transmissions reaches the second threshold.

For example, in a case that the PRACH transmission performed by the UE on the first RO is canceled and the number of times that the PRACH transmission performed by the UE on the valid RO in the first RO group is canceled reaches the first threshold, the UE cancels the PRACH transmission on the valid RO after the first RO in the first RO group, and selects the valid RO in the second RO group after the first RO group to perform the PRACH transmission, until it is satisfied that the number of PRACH transmissions reaches the second threshold.

It may be understood that the number of PRACH transmissions reaching the second threshold may mean that the number of times the UE performs the PRACH transmission on the valid RO in the first RO group reaches the second threshold, or may mean that the number of times the UE performs the PRACH transmission on the valid ROs in the first RO group and the second RO group reaches the second threshold, and so on.

The number of PRACH transmissions reaching the second threshold may mean that the number of times the UE performs the PRACH transmission on the valid ROs in all RO groups reaches the second threshold.

In some embodiments, the UE may determine the second threshold based on a protocol agreement, or may determine the second threshold based on an indication from the network device, or may determine the second threshold based on implementation.

In some embodiments, the second threshold is a number of valid ROs in the first RO group.

In embodiments of the disclosure, the second threshold is the number of valid ROs in the first RO group.

For example, if the number of valid ROs in the first RO group is 5, the second threshold may be determined as 5.

In some embodiments, the valid ROs in the first RO group and the second RO group are associated with same or different SSBs.

In embodiments of the disclosure, the valid ROs in the first RO group and the second RO group may be associated with the same or different SSBs.

It may be understood that, in a case that the valid ROs in the first RO group and the second RO group are associated with the same SSB, when the UE selects the valid RO in the second RO group after the first RO group to perform the PRACH transmission, the UE needs to select an RO group whose valid ROs are associated with the same SSB as the valid ROs in the first RO group, as the second RO group.

In some embodiments, the number of valid ROs in the first RO group may be the same as or different from the number of valid ROs in the second RO group.

In some embodiments, a number of PRACH transmissions on the valid ROs in the first RO group may be the same as or different from a number of PRACH transmissions on the valid ROs in the second RO group.

In this embodiment or other embodiments, without conflict, the various steps may be performed independently, in any combination, or in any order; optional methods or examples may be combined arbitrarily, and may be combined arbitrarily with other embodiments or examples.

It should be noted that, in embodiments of the disclosure, S91 may be implemented alone or in combination with any other step in the embodiments of the disclosure, such as in combination with S31 and/or S51 of the embodiments of the disclosure, which is not limited in the embodiments of the disclosure.

By implementing the embodiments of the disclosure, the UE cancels the PRACH transmission on the valid RO after the first RO in the first RO group, in which the PRACH transmission performed by the UE on the first RO is canceled, and the number of times that the PRACH transmission performed by the UE on the valid RO in the first RO group is canceled reaches the first threshold, and selects the valid RO in the second RO group after the first RO group to perform the PRACH transmission. Thus, the UE may ensure that the PRACH transmission is performed as successful as possible, thus reducing power consumption of the UE and shortening the access delay.

In the embodiments provided in the disclosure, the method provided in the embodiments of the disclosure is introduced from the perspective of the UE.

Referring to FIG. 10, it is a block diagram illustrating a communication apparatus 1 according to an embodiment of the disclosure. The communication apparatus 1 illustrating in FIG. 10 may include a transceiver module 11 and a processing module. The transceiver module 11 may include a transmitting module and/or a receiving module, the transmitting module is used for realizing a transmitting function, and the receiving module is used for realizing a receiving function, and the transceiver module may realize the transmitting function and/or the receiving function.

The communication apparatus 1 may be a UE, an apparatus in the UE, or an apparatus that may be used in conjunction with the UE.

In the case that the communication apparatus 1 is configured on the UE, the UE includes the transceiver module 11.

The transceiver module 11 is configured to determine to perform PRACH transmission on a valid RO after a first RO in a first RO group; or cancel PRACH transmission on a valid RO after a first RO in a first RO group, in which the PRACH transmission performed by the UE on the first RO is canceled.

In some embodiments, the transceiver module 11 is further configured to determine that a number of times that the PRACH transmission performed by the UE on the valid RO in the first RO group is canceled reaches a first threshold, and canceling, by the UE, the PRACH transmission on the valid RO after the first RO in the first RO group.

In some embodiments, the transceiver module 11 is further configured to determine that a number of times that the PRACH transmission performed by the UE on the valid RO in the first RO group is canceled is less than a first threshold, and continuing, by the UE, the PRACH transmission on the valid RO after the first RO in the first RO group.

In some embodiments, the first threshold is determined based on one or more of: a transmission protocol specification, indication information sent by a network device, or a preset rule.

In some embodiments, the first threshold is related to a number of valid ROs in the first RO group.

In some embodiments, the first threshold is a quotient of a number of valid ROs in the first RO group to a preset value.

In some embodiments, the transceiver module 11 is further configured to select a valid RO in a second RO group after the first RO group to perform the PRACH transmission.

In some embodiments, the transceiver module 11 is further configured to determine to cancel the PRACH transmission on the valid RO in the second RO group after the first RO group in a case that a specific condition is satisfied.

In some embodiments, the specific condition includes at least one of: the PRACH transmission being not canceled; an RAR sent by a network device being received; or a number of PRACH transmissions reaching a second threshold.

In some embodiments, the PRACH transmission being not canceled includes: the PRACH transmission on the valid RO in the first RO group being not canceled, or the PRACH transmission on the valid RO in the second RO group being not canceled.

In some embodiments, the second threshold is a number of valid ROs in the first RO group, or the second threshold is a total number of valid ROs in the first RO group and the second RO group.

In some embodiments, the valid ROs in the first RO group and the second RO group are associated with same or different SSBs; and/or the number of valid ROs in the first RO group is the same as or different from the number of valid ROs in the second RO group; and/or a number of PRACH transmissions on the valid ROs in the first RO group is the same as or different from a number of PRACH transmissions on the valid ROs in the second RO group.

In some embodiments, the transceiver module 11 is further configured to determine a resource collision between the PRACH transmission on the valid RO and transmission of a specific channel or a signal; and determine to perform the PRACH transmission on the valid RO.

In some embodiments, the transmission of the specific channel or the signal includes at least one of: SSB transmission; cell-level semi-static DL channel reception; UE-level semi-static DL reception; dynamic DL reception; SRS transmission; PUCCH transmission; or PUSCH transmission.

In some embodiments, the PRACH transmission performed by the UE on the first RO being canceled is associated with one or more of: a time-domain collision or power allocation with another transmission resource.

In some embodiments, the UE operates in a TDD band or a FDD band, or the UE is a HD UE or a FD UE.

For the communication apparatus 1 in the above embodiments, the specific manner in which each module performs operations has been described in detail in the embodiments related to the method, which will not be described in detail herein.

The communication apparatus 1 provided in the above embodiments of the disclosure achieves the same or similar beneficial effects as the method for PRACH transmission provided in some of the above embodiments, which will not be repeated herein.

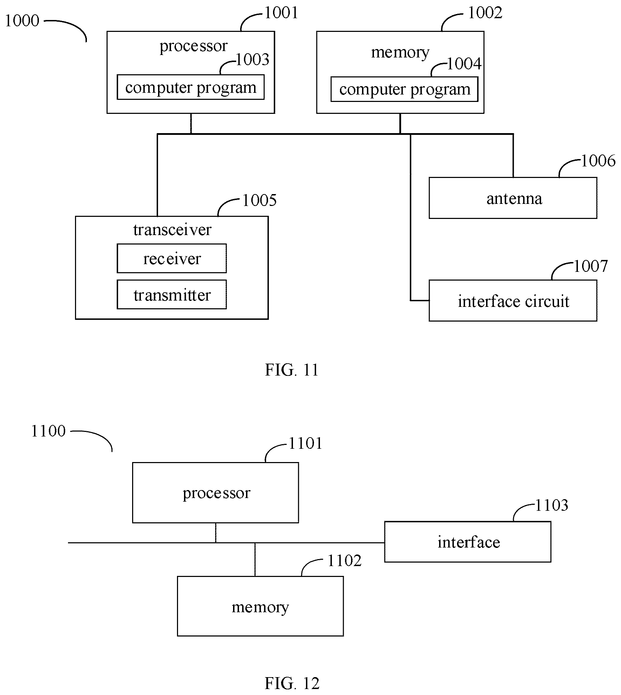

Referring to FIG. 11, it is a block diagram illustrating a communication device 1000 according to an embodiment of the disclosure. The communication device 1000 may be a UE, a chip, a system on chip or a processor that supports the UE to implement the above method, or a chip, a system on chip or a processor that supports the UE to implement the above method. The communication device 1000 may be configured to implement the methods described in the method embodiments, and for details reference may be made to descriptions in the method embodiments.

The communication device 1000 may include one or more processors 1001. The processor 1001 may include a general purpose processor or a dedicated processor. For example, the processor may be a baseband processor or a central processor. The baseband processor may be configured to process a communication protocol and communication data, and the central processor may be configured to control a communication device (e.g., a network side device, a baseband chip, a UE, a UE chip, a DU or CU, etc.), to execute a computer program, and process data of the computer program.

Optionally, the communication device 1000 may further include one or more memories 1002 with a computer program 1004 stored. The computer program 1004 is executed by the processor 1001, so that the communication device 1000 performs the method as described in the above method embodiments. In some possible implementations, the memory 1002 may further store data. The communication device 1000 and the memory 1002 may be independently configured or integrated together.

Optionally, the communication device 1000 may further include a transceiver 1005 and an antenna 1006. The transceiver 1005 may be referred to as a transceiving unit, a transceiving machine or a transceiving circuit, which may be configured to achieve a transceiving function. The transceiver 1005 may include a receiver and a transmitter. The receiver may be referred to as a receiving machine or a receiving circuit, etc., for implementing a receiving function; the transmitter may be referred to as a transmitting machine or a transmitting circuit, etc. for implementing a transmitting function.

Optionally, the communication device 1000 may further include one or more interface circuits 1007. The interface circuit 1007 is configured to receive code instructions and transmit the code instructions to the processor 1001. The code instructions are executed by the processor 1001 so that the communication device 1000 performs the method as described in the above method embodiments.

In a case that the communication device 1000 is a UE, the transceiver 1005 is configured to perform the method shown in FIG. 2 to FIG. 9.

Optionally, the processor 1001 may include a transceiver configured to implement receiving and transmitting functions. For example, the transceiver may be a transceiving circuit, or an interface, or an interface circuit. The transceiving circuit, the interface or the interface circuit configured to implement receiving and transmitting functions may be separate or integrated together. The transceiving circuit, the interface or the interface circuit may be configured to read and write codes/data, or the transceiving circuit, the interface or the interface circuit may be configured to transmit or deliver a signal.

Optionally, the processor 1001 may include a computer program 1003. The computer program 1003 is executed by the processor 1001 so that the communication device 1000 performs the method as described in the above method embodiments. The computer program 1003 may be solidified in the processor 1001, in which case the processor 1001 may be implemented by hardware.

Optionally, the communication device 1000 may include a circuit that may implement a transmitting or receiving or communication function in the above method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs), electronic devices, etc. The processor and the transceiver may further be fabricated by using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe) and gallium arsenide (GaAs).

The communication device described in the above embodiments may be a UE, but the scope of the communication device described in the disclosure is not limited, and a structure of the communication device may not be limited by FIG. 11. The communication device may be a stand-alone device or may be a part of a larger device. For example, the communication device may be the following:
(1) a stand-alone integrated circuit (IC), or a chip, or a system on chip or a subsystem;
(2) a set of one or more ICs, optionally, which may also include a storage component for storing data and a computer program;
(3) an ASIC, such as a Modem;
(4) a module that may be embedded within other devices;
(5) a receiver, a UE, a smart UE device, a cellular phone, a wireless device, a handset, a mobile unit, a vehicle-mounted device, a network side device, a cloud device, an artificial intelligence device, etc.;
(6) others, and so forth.

In the case that the communication device may be a chip or a system on chip, a block diagram of a chip shown in FIG. 12 may be referred. FIG. 12 is a block diagram illustrating a chip according to an embodiment of the disclosure.

The chip 1100 includes a processor 1101 and an interface 1103. There may be one or more processors 1101 and there may be a plurality of interfaces 1103.

In a case that the chip is configured to implement functions of the UE in the embodiments of the disclosure, the interface 1103 is configured to receive code instructions and transmit the code instructions to the processor; and the processor 1101 is configured to execute the code instructions to implement the method in the above embodiments.

Optionally, the chip 1100 further includes a memory 1102, configured to save necessary computer program and data.

Those skilled in the related art may understand that various illustrative logical blocks and steps listed in embodiments of the disclosure may be implemented by electronic hardware, computer software or a combination of electronic hardware and computer software. Whether the function is implemented by hardware or software depends on specific applications and design requirements for an overall system. Those skilled in the art may implement the functions by using various methods for each specific application, but such an implementation should not be understood as beyond the protection scope of embodiments of the disclosure.

An embodiment of the disclosure further provides a communication system. The system includes the communication apparatus functioning as the UE in the above embodiments of FIG. 10, or the system includes the communication apparatus functioning as the UE in the above embodiments of FIG. 11.

A readable storage medium with instructions stored is further provided in the disclosure. When the instructions are executed by a computer, the steps in any one of the method embodiments are implemented.

A computer program product is further provided in the disclosure. The computer program product implements functions of the any one of the above method embodiments when executed by a processor.

In the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another via wire (such as a coaxial cable, a fiber optic, a digital subscriber line (DSL)) or wireless (such as infrared, wireless, microwave). The computer-readable storage medium may be any available medium that may be accessed by a computer or a data storage device such as a server that integrates one or more of the available media, and a data center. The readable medium may be a magnetic medium (such as a floppy disk, a hard disk and a magnetic tape), an optical medium (such as a digital video disk (DVD)), or a semiconductor medium (such as a solid state disk (SSD)).

Those skilled in the art may understand that various numbers such as first and second involved in the disclosure are distinguished merely for convenience of description, but not intended to limit the scope of the embodiments of the disclosure, not to indicate an order of precedence.

The phase "at least one" in the disclosure may also be described as one or more, and the phase "a plurality of" may refer to two, three, four or more, which is not limited in the disclosure. In the embodiments of the disclosure, for a kind of technical feature, technical features in the kind of technical feature are distinguished by "first", "second", "third", "A", "B", "C" and "D", and there is no order of precedence or magnitude between the technical features described in "first", "second", "third", "A", "B", "C" and "D".

Depending on the context, the word "if" and "in case" as used herein may be interpreted as "in a case that" or "when" or "in response to a determination".

Corresponding relationships indicated by tables in the disclosure may be configured or predefined. A value of information in the tables is only an example, and may be configured as other values, which is not limited in the disclosure. When corresponding relationships between information and parameters are configured, it is not always necessary to configure all corresponding relationships indicated in the tables. For example, in the tables in the disclosure, the corresponding relationships indicated by some rows may not be configured. For another example, appropriate transformations and adjustments, such as splitting and merging, may be made based on the above tables. Names of parameters shown in headers in the tables may be other names understandable by the communication apparatus, and values or representations of the parameters may be other values or representations understandable by the communication apparatus. When the above tables are implemented, other data structures may be used, and for example, arrays, queues, containers, stacks, linear lists, pointers, linked lists, trees, graphs, structures, classes, heaps or hash tables may be used.

Predefined in the disclosure may be understood as defined, predefined, stored, pre-stored, pre-negotiated, pre-configured, solidified or pre-fired.

Those skilled in the related art may realize that, in combination with units and algorithm steps of the examples described in embodiments of the disclosure, may be implemented by electronic hardware or a combination of electronic hardware and computer software. Whether the functions are executed by hardware or software depends on a specific application and a design constraint of the technical solution. Those skilled in the art may adopt different methods for each specific application to implement the described functions, but such implementation should not be considered as going beyond the scope of the disclosure.

Those skilled in the art may clearly understand that, for a specific working process of a system, an apparatus and a unit described above reference may be made to a corresponding process in the above method embodiments, which will not be repeated here.

The above are only implementations of the disclosure. However, the protection scope of the disclosure is not limited here. Changes and substitutions that may be easily considered by those skilled in the art shall be included within the protection scope of the disclosure. Thus, the protection scope of the disclosure shall be subject to the protection scope of claims.

## Claims

1. A method for physical random access channel (PRACH) transmission, performed by a user equipment (UE), the method comprising:
determining to perform PRACH transmission on a valid random access channel occasion (RO) after a first RO in a first RO group; or
canceling PRACH transmission on a valid RO after a first RO in a first RO group,
wherein the PRACH transmission performed by the UE on the first RO is canceled.

2. The method according to claim 1, further comprising:
determining that a number of times that the PRACH transmission performed by the UE on the valid RO in the first RO group is canceled is greater than or equal to a first threshold, and canceling, by the UE, the PRACH transmission on the valid RO after the first RO in the first RO group.

3. The method according to claim 1 or 2, further comprising:
determining that a number of times that the PRACH transmission performed by the UE on the valid RO in the first RO group is canceled is less than a first threshold, and continuing, by the UE, the PRACH transmission on the valid RO after the first RO in the first RO group.

4. The method according to claim 2 or 3, wherein the first threshold is determined based on one or more of: a transmission protocol specification, indication information sent by a network device, or a preset rule.

5. The method according to any one of claims 2 to 4, wherein the first threshold is related to a number of valid ROs in the first RO group.

6. The method according to any one of claims 2 to 5, wherein the first threshold is a ratio of a number of valid ROs in the first RO group to a preset value.

7. The method according to any one of claims 1 to 6, further comprising:
selecting a valid RO in a second RO group after the first RO group to perform the PRACH transmission.

8. The method according to claim 7, further comprising:
determining to cancel the PRACH transmission in a case that a specific condition is satisfied.

9. The method according to claim 8, wherein the specific condition comprises at least one of:
the PRACH transmission being not canceled; a random access response (RAR) sent by a network device being received; or a number of PRACH transmissions reaching a second threshold.

10. The method according to claim 9, wherein the PRACH transmission being not canceled comprises: the PRACH transmission on the valid RO in the first RO group being not canceled, or the PRACH transmission on the valid RO in the second RO group being not canceled.

11. The method according to claim 9 or 10, wherein
the second threshold is a number of valid ROs in the first RO group, or
the second threshold is a total number of valid ROs in the first RO group and the second RO group.

12. The method according to any one of claims 7 to 11, wherein the valid ROs in the first RO group and the second RO group are associated with same or different synchronous signal/ physical broadcast channel blocks (SSBs); and/or
the number of valid ROs in the first RO group is the same as or different from the number of valid ROs in the second RO group; and/or
a number of PRACH transmissions on the valid ROs in the first RO group is the same as or different from a number of PRACH transmissions on the valid ROs in the second RO group.

13. The method according to any one of claims 1 to 12, further comprising:
determining a resource collision between the PRACH transmission on the valid RO and transmission of a specific channel or a signal; and
determining to perform the PRACH transmission on the valid RO.

14. The method according to claim 13, wherein the transmission of the specific channel or the signal comprises at least one of:
SSB transmission; cell-level semi-static downlink channel reception; UE-level semi-static downlink reception; dynamic downlink reception; sounding reference signal (SRS) transmission; physical uplink control channel (PUCCH) transmission; or physical uplink shared channel (PUSCH) transmission.

15. The method according to any one of claims 1 to 14, wherein the PRACH transmission performed by the UE on the first RO being canceled is associated with one or more of: a time-domain collision or power allocation with another transmission resource.

16. The method according to any one of claims 1 to 15, wherein the UE operates in a time division duplex (TDD) band or a frequency division duplex (FDD) band, or
the UE is a half duplex (HD) UE or a full duplex (FD) UE.

17. A communication apparatus, comprising:
a transceiver module, configured to determine to perform physical random access channel (PRACH) transmission on a valid random access channel occasion (RO) after a first RO in a first RO group; or cancel PRACH transmission on a valid RO after a first RO in a first RO group,
wherein the PRACH transmission performed by a user equipment (UE) on the first RO is canceled.

18. A communication device, comprising a processor and a memory storing a computer program that, when executed by the processor, causes the communication device to implement the method according to any one of claims 1 to 16.

19. A communication device, comprising: a processor and an interface circuit; wherein
the interface circuit is configured to receive code instructions and transmit the code instructions to the processor; and
the processor is configured to execute the code instructions to implement the method according to any one of claims 1 to 16.

20. A computer-readable storage medium storing instructions that, when executed, cause the method according to any one of claims 1 to 16 to be implemented.

21. A communication system, comprising:
a network device, configured to send configuration information to a user equipment (UE), wherein the configuration information indicates a valid RO in a first RO group for performing physical random access channel (PRACH) transmission; and
the UE, configured to receive the configuration information sent by the network device, and determine the valid RO in the first RO group based on the configuration information;
wherein the UE is further configured to determine to perform PRACH transmission on a valid RO after a first RO in a first RO group; or cancel PRACH transmission on a valid RO after a first RO in a first RO group,
wherein the PRACH transmission performed by the UE on the first RO is canceled.

22. The system according to claim 21, wherein
the network device is further configured to send indication information to the UE, wherein the indication information instructs the UE to perform transmission of a specific channel or a signal on the first RO; and
the UE is further configured to determine to cancel the PRACH transmission on the first RO based on the indication information.
